# EUROPEAN PATENT APPLICATION

(11) **EP 1 460 573 A2**
(43) Date of publication of application: **22.09.2004**
(21) Application number: 04251365.5
(22) Date of filing: 10.03.2004
(51) Int. Cl.: G06F 17/60

(54) **Apparatus and method for remote content delivery**

(30) Priority: 21.03.2003 US 393894
(71) Applicant: Nokia Corporation, 02150 Espoo (FI)
(72) Inventor: Wakim, Peter, 00100 Helsinki (FI); Engeström, Jyri, 00530 Helsinki (FI)
(74) Representative: Walaski, Jan Filip

(57) **Abstract**

Merchant-media information is communicated to a selected user in response to a user identification (ID) being presented at a media location. According to one example embodiment, a user presents an ID tag to an ID tag reader at a merchant-media arrangement (*e.g.*, a billboard, display screen, audio speaker or advertisement) having a media content ID. The ID tag communicates a user ID to the ID tag reader, and an information request signal including data representing the user ID and the media content ID is sent to a remote server. The remote server uses the user ID and the media content ID to send media content information (*e*.*g*., product data, a discount voucher, *etc.*) to a user address. With this approach, users can request and/or receive information at a point-of-use media display.

## Description

### FIELD OF THE INVENTION

This invention relates in general to communications, and more particularly to a system, method and apparatus for initiating delivery of remote information, content, services and applications.

A portion of the disclosure of this patent document contains material that is subject to copyright protection. The copyright owner has no objection to the facsimile reproduction by anyone of the patent document or the patent disclosure, as it appears in the U.S. Patent & Trademark Office patent file or records, but otherwise reserves all copyright rights whatsoever.

### BACKGROUND OF THE INVENTION

Traditional approaches to data communication in public places, such as advertising or providing other information in public places, have relied upon relatively simple approaches, typically involving printed and/or displayed media. This displayed media approach is relatively devoid of interactive communications. Billboards, kiosks, vending machines, restaurant menus and other forms of public advertising do not provide a means to directly initiate interactive communication between merchants and consumers. For instance, when a consumer wishes to obtain data or learn more about a particular advertisement, he or she must typically either remember or write down information, and at a later time seek out any additional information he or she is interested in learning about. Similarly, merchants currently have to rely on indirect methods, such as polls and market research, to discover whether customers noticed their announcements.

In some instances, public data communications have involved wireless technologies that have improved the ability of consumers to communicate in public places. For example, wireless telephones enable users to make and receive calls when not at home. Wireless Internet appliances enable users to access the Internet and retrieve information from a public place where wireless communications are present. Other wireless devices, such as personal digital assistants (PDAs) are also growing in use. These approaches have been found useful in conveying information to users in public locations. However, even with wireless appliances, information retrieval has typically required users to actively seek data *(i.e.,* make a telephone call or browse the Internet). Moreover, many users do not have access to wireless appliances and, while access may be available, such access is often inconvenient.

In view of the above, there is a need for interactive information exchange that is convenient and inexpensive.

### SUMMARY OF THE INVENTION

The present invention is directed to a system, apparatus, and method for requesting information and services/applications for merchant-type products and/or services, as well as facilitating receipt of information such as advertising information.

In accordance with one embodiment of the invention, a merchant-media arrangement communicates with a user-communications device within a local proximity of the merchant-media arrangement for obtaining identification (ID) data from the user-communications device. The user ID data is obtained by the merchant-media arrangement and used for selecting a communications-user receipt address. Stored data for the merchant-media arrangement is then communicated to the selected communications-user-receipt address.

In another example embodiment of the present invention, a radio frequency (RF) reader communicates with an RF tag within a local proximity of the RF reader. The RF tag includes at least one transponder having a user ID and adapted for responding to wireless activation signals from the RF reader by communicating an RF signal including the user ID to the RF reader. The RF reader then communicates the user ID and a unique RF reader ID to a remote processing arrangement. The remote processing arrangement uses the user ID to identify a particular type of communications medium and address that are to be used, and also uses the RF reader ID to identify a particular type of content to be communicated. The content is then communicated to the communications address via the particular type of communications medium (*e.g.*, email, voice mail, voice call, short-message service (SMS), Java application, multi-media message service (MMS) message, the initiation of an Internet browser session or paper).

In another example embodiment of the present invention, a merchant-media arrangement is adapted for conveying merchant-media information (*i.e.*, audio and/or visual advertisements) to a user and, in response to the user presenting an RFID tag, to send merchant-media information to an address specified by the user. The merchant-media arrangement includes a RFID reader, a microcontroller (*e.g.*, a microprocessor) and a transceiver for communicating with a remote processing arrangement, such as discussed above. The remote processing arrangement includes a memory having information stored therein, including address information corresponding to an ID of the RFID tag and merchant-media information corresponding to an ID of the RFID reader. In response to receiving communications including the RFID tag ID and the RFID reader ID, the remote processing arrangement accesses the memory and sends the merchant-media information using the address information.

In another example embodiment of the present invention, the merchant-media arrangement discussed above is further adapted for interactively communicating with a local user presenting a RFID tag. In one instance, a user interface such as a keyboard, switch (*e.g.*, a push button), touch screen or other arrangement is used for inputting user selections, such as content selections and communications medium selections. In another instance, a wireless communications link at the merchant-media arrangement communicates with the local user, for example, for sending information or receiving requests.

The above summary of the present invention is not intended to describe each illustrated embodiment or implementation of the present invention. The figures and the associated discussion that follows describe further embodiments and implementations.

### BRIEF DESCRIPTION OF THE DRAWINGS

Various aspects of the invention are described in connection with the example embodiments illustrated in the figures, in which:
FIG. 1 is a system for the communication of merchant-media data to a user via a user RFID tag, according to an example embodiment of the present invention;
FIG. 2 is another system for the communication of merchant-media data to a user, according to another example embodiment of the present invention;
FIG. 3 is a portable media communications arrangement for implementation in connection with merchant-media, according to another example embodiment of the present invention; and
FIG. 4 is an information block used for the communication of merchant media to a user, according to another example embodiment of the present invention.

### DETAILED DESCRIPTION OF THE INVENTION

In the following description, reference is made to the accompanying drawings that form a part hereof, and in which is shown by way of illustration the example embodiments in which the invention may be practiced. It is to be understood that other embodiments may be utilized, as structural and operational changes may be made without departing from the scope of the present invention.

Generally, the present invention is directed to approaches for retrieving information from a remote server using local communication technology, such as those short-range communications technologies involving electromagnetic/electrostatic-coupling technology. In one embodiment, electromagnetic and/or electrostatic coupling is implemented in the radio frequency (RF) portion of the electromagnetic spectrum, using for example radio frequency identification (RFID) technology. A merchant-media device is equipped with an RF reader adapted to emit RF activation waves, and transponders or "tags" brought within the range of the RF reader are activated by the RF activation. When activated, the tags transmit information possessed by the tags to the RF reader. For instance, when the RF reader is emitting the activation waves while the tag is within a range of the RF reader sufficient to allow two-way communications between the RF reader and the tag, identification information at the tag is transmitted to the RF reader.

In one embodiment of the invention, the tag provides user specific information, such as a particular user identification (ID) that corresponds to the user of the tag. When brought in proximity range of a transmitting RFID reader, the user ID of the tag is transmitted to the RFID reader, which in turn may transmit the received user ID and information relating to the RFID reader itself to a remote processor arrangement. In one instance, the RFID reader transmits a unique ID for the RFID reader to the remote processor arrangement, which associates the unique ID with a particular type of information. In another instance, the RFID reader transmits information relating to the RFID reader that includes an identification of a particular type of information being displayed near the RFID reader. The remote processor arrangement then uses the user ID and the information relating to the RFID reader for sending content to the user at a particular communications-user-receipt address, such as a mail address, email address or telephone number. For instance, by associating the user ID with stored user-receipt addresses in order to send the requested information to a right destination.

In one embodiment of the invention the tag is a user-communications device including a memory that may store information, such as a unique identification number, and means for delivering the stored information to a requesting source. The means for delivering the stored information including, but not limited to, a RFID tag (active or passive), a barcode, a chip card, a smartcard, a magstripe, a WLAN and a bluetooth device.

In one implementation, a merchant-media arrangement including the RFID reader discussed in the above paragraph provides the content to the user without necessarily using the remote processor arrangement. In one instance, the tag includes information regarding the communications medium and/or content, which is in turn communicated to and used by the merchant-media information for sending requested information to the particular communications-user-receipt address. In another instance, the remote processor arrangement is located in the merchant-media arrangement, and operates as discussed above. In still another instance, the merchant-media arrangement is adapted for receiving tag information from a plurality of RFID readers in an independent merchant-media system. For instance, several media displays at a particular location, such as at a public transportation location, at a sporting event or other venue, a local remote processor arrangement can be implemented for RFID readers at various displays and advertisements. The system could be distributed or even consisting of a plurality of independent systems.

In a more particular implementation, the remote processor arrangement is adapted to store content for merchant subscribers and to assign an RFID reader ID to particular content. When a tag is brought within range of the RFID reader such that the user ID is transmitted via the RFID reader to the remote processor arrangement, the particular content associated with the RFID reader ID is communicated to the user.

The remote processor arrangement discussed above is adapted to store communications data for registered users in connection with another example embodiment of the present invention. When a registered user presents a tag to a RFID reader field (*i.e.*, within range of an RFID reader), user ID information from the tag is transmitted to the RFID reader, which in turn may send the user ID information to the remote processor arrangement. The remote processor arrangement then uses the user ID information to identify a particular communication medium over which to send the content to the user. In one instance, a registered user provides the remote processor arrangement with user preferences including registered contact information (*i.e.*, email address or telephone number). The remote processor arrangement then uses the preferred contact information to send information to the user.

In one implementation, the user stores data including two or more addresses at the remote processor arrangement. The RFID reader transmits information related to a selection of one of the two addresses to the remote processor arrangement, and in response, the remote processor arrangement selects one of the two addresses for delivery of information to the user. In one example, two or more RFID readers are present at a merchant-media arrangement (*e.g.*, a billboard advertisement, an active video display, an audio broadcast or other media-conveying device with the RFID readers attached thereto). The RFID readers are spaced apart such that an RFID tag does not simultaneously transmit to both of the RFID readers, such that a user can select only one of the readers for interaction, if desired. Each of the RFID readers is programmed with a particular type of communications to be associated with it (*e.g.*, email address or telephone number). A user places his or her tag in proximity of one of the RFID readers, based upon the desired communications medium that the user wishes to use for receiving information relating to the merchant-media arrangement (*e.g.*, displayed product information).

In another example embodiment of the present invention, a RFID reader arrangement is adapted for receiving communications media selections from a particular user, such as from a push button at a merchant-media location or from a wireless device, in connection with a user ID from a tag. For instance, selections that can be made include the selection of a particular type of communications media through which content is to be sent or of a particular type of content (*e.g.*, content related to a specific one of several types of products/services available from a particular merchant). Users desiring information place a tag within a proximity range of an RFID reader arrangement and make corresponding selections. The RFID reader arrangement receives not only user ID data from the tag but also receives communications media selections from the user.

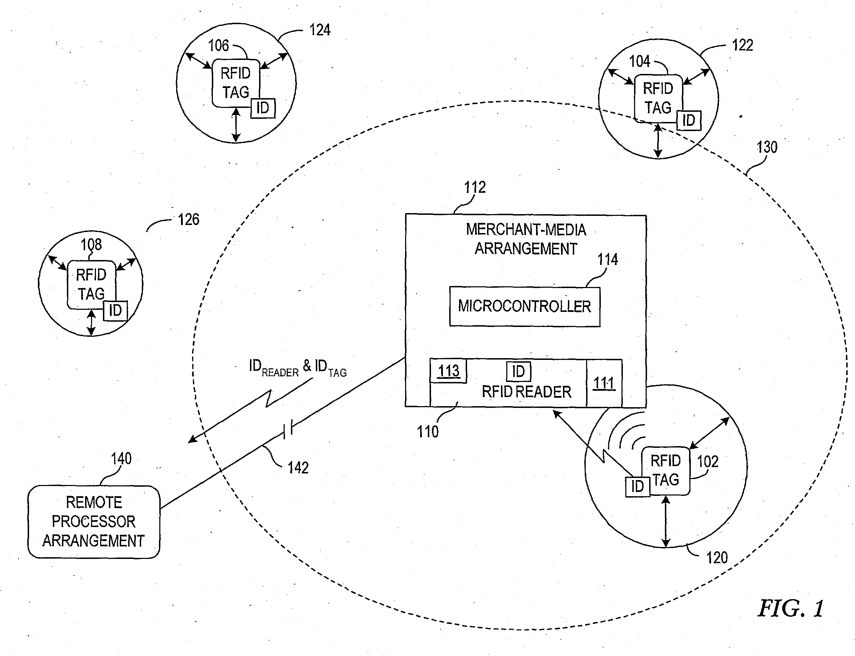

FIG. 1 is a block diagram illustrating another example embodiment of the present invention, in which a particular RFID tag 102 communicates with a merchant-media arrangement 112 using an RFID reader 110. The merchant-media arrangement 112 further includes a microcontroller 114 that communicates data representing the RFID tag and the merchant-media arrangement to a remote processing arrangement 140 using a communications link 142.

The embodiment of FIG. 1 is shown generally to permit for different types of applications and arrangements. For example, the merchant-media arrangement could be adapted to accommodate applications serving different types of providers such as advertisers, merchants or even government entities. Various alternative implementations of the merchant-media arrangement 112 could vary from a bus stop including a car advertisement delivering information using SMS or email, to a tax office including an information point delivering tax preparation information to the user's home address or email.

The communications link 142 includes one or more of a variety of links, such as wired and/or wireless link, a mobile telephone link or an Internet link. In addition, the communications link 142 is adapted for communicating one or more types of data, such as Internet protocol data, packet data and telephony data. The merchant-media arrangement 112 initiates programmed tasks, such as communicating applications, services or other specific actions, in response to detecting that the RFID tag 102 is within a certain range of the RFID reader 110, as discussed herein.

FIG. 1 depicts a number of such RFID tags, namely RFID tags 102, 104, 106, 108, with each RFID tag shown having a corresponding communications range. When a particular RFID tag is brought within its range of the RFID reader 110, a user ID at the RFID tag is transmitted to the RFID reader. The coverage area of any one of these RF (or RFID) tags is largely dependent on the RF tag antenna characteristics, interrogation signal power and the type of RF communication employed (*e.g.*, frequency spectrums and communication protocol). In various applications, any of a variety of RF communication types could be used, including but not limited to those described in the following: ISO/IEC 18001 Information Technology AIDC Techniques-RFID for Item Management - Application Requirements Profiles; and The Air Interface Standards of ISO/IEC JTC 1/SC 31 are contained in the various Parts of ISO/IEC 18000, Radio-frequency Identification Standard for Item Management -- Air Interface (see frequency ranges respectively listed in Parts 1-6). Other frequency spectrums are advantageous for applications benefiting from a passive antenna arrangement that can be energized wirelessly.

The communication between the RFID reader 110 and one or more RFID tags utilizes electromagnetic or electrostatic coupling in the radio frequency (RF) portion of the electromagnetic spectrum. The RFID reader 110 includes at least an antenna 111 and a transceiver 113. An RF signal is transmitted from the RFID reader 110 that activates the tags 102, 104, 106, 108 when touched to, or within a predetermined range of, the reader. When a tag has been activated, it transmits information back to the RFID reader 110. More particularly, in the case of a passive tag, the tag is energized by a time-varying electromagnetic RF wave generated by the RFID reader 110. When the RF field passes through the antenna coil associated with the tag, a voltage is generated across the coil. This voltage powers the tag and makes possible the tag's return transmission of information to the reader, sometimes referred to as backscattering. For general information regarding RFID principles, and for specific information regarding RFID approaches that may be implemented in connection with one or more example embodiments discussed herein, reference may be made to "Radio Frequency Identification -RFID: A Basic Primer", published by the Automatic Identification Manufacturers (AIM), October 23, 2001 and fully incorporated herein by reference.

The transmission range of the reader/tag link is at least partially dictated by the frequency employed in the transmission. Referring again to FIG. 1, the required proximity of the RFID reader 110 to a tag can range from a very short range (touching or near touching) to many meters, depending on the frequency employed and the power output. Each of the RFID tags shown in FIG. 1 illustrates a range for that RFID tag, as related to the tag transmission (*i.e.*, antenna) arrangement. For example, when the RFID reader is within a range 120 of RFID tag 102, the tag 102 can receive the signal from the RFID reader 110 and respond with the desired information (*i.e.*, user ID). Other ranges 122,124,126 are illustrated for RFID tags 104,106, 108 respectively. As shown, the other RIFD tags 104,106 and 108 are outside of their corresponding ranges (122, 124 and 126) of the RFID reader 110.

In connection with one example embodiment, two or more RFID readers *(i.e.,* similar to RFID reader 110) are used, with each RFID reader spaced from other RFID readers at a distance that is greater than the RFID tag range. With this approach, the transmission of RFID tag data can be limited to one of the two or more RFID readers.

In one particular implementation, a tag having substantially no transmission range is used for communicating with a RFID reader. The tag includes contacts that physically (or nearly physically) couple to corresponding contacts on the RFID reader 110, with user ID information being communicated to the RFID reader 110 using the physical coupling. For example, the contacts may include contacts for transmitting power and/or signals to the tag from the RFID reader.

In another example implementation, the merchant-media arrangement 112 also transmits other information, such as audio-visual advertising information, in a range 130 from the RFID reader 110. RFID tag arrangements equipped to receive a signal from the RFID reader arrangement can then receive the information. For instance, when a RFID tag is implemented in connection with a mobile phone or laptop, wireless communications from the merchant-media arrangement 112 are transmitted thereto for soliciting the user. If a user holding an RFID tag is interested in receiving more information, he or she moves his or her RFID tag within a particular range of the RFID reader 110 to transmit a user ID from the RFID tag. In this instance, a user holding RFID tag 102 is within range for transmitting the user ID information to the RFID reader 110. A user holding RFID tag 104 is within range of receiving wireless communications from the merchant-media arrangement 112 and positions his/her RFID tag 104 within the range 122 of the RFID reader 110 to retrieve additional data. Users holding RFID tags 106 and 108 are out of the range 130 and do not receive the wireless information from the merchant-media arrangement 112.

In various implementations, a plurality of different types of RFID tags is used in connection with the present invention. For example, RFID tags can be either active or passive. Active tags often employ an internal battery or other power source and are often read/write tags (*e.g.*, they can read information from a merchant-media arrangement, as discussed above). Passive tags do not necessarily require a dedicated power source, and obtain operating power generated from the reader. Further, tags may come in a variety of shapes and sizes, such as those based on a custom designed silicon integrated circuit. Any transponder/tag may be used in connection with the present invention, and the tag type, size, *etc.* depends on the particular environment and purpose in which physical browsing in accordance with the invention will be employed. For instance, an RFID tag can be installed a simple card, such as a credit card, a travel card (for public transportation use), payment card, loyalty card or an identification card, or even an access key. In other instances, the RFID tag installed in a device such as a mobile phone, a personal digital assistant (PDA) or a laptop computer, and in some implementations, is implanted in a human.

Any number of RFID readers, such as those discussed above, can be positioned at various locations in which a user may physically encounter. For example, such RFID readers can be located at retail stores, hotels, restaurants, night clubs, bus stops, train stations and airports, offices, taxis, conference centers, *etc.* Any of a variety of locations may serve as a venue for a RFID reader in accordance with the present invention; particular applications facilitate the communication between the merchant-media arrangement and the RFID users.

In one implementation, advertisements having RFID readers are located at a bus stop or other boarding/queuing area typically present in public transportation systems. The RFID readers communicate with RFID tags in travel cards used for travel in the public transportation system. In another example, a restaurant includes an RFID reader near its front door or other display area that provides the restaurant menu. Users wishing to hear more about a particular type of entrée or wine place their RFID tag near the RFID reader and corresponding information is sent to the user (*e.g.*, using a real-time email or phone call to a wireless device of the user). Alternatively, the RFID reader may use the user's RFID tag to send an address such as a Uniform Resource Locator (URL) of the restaurant's web site to the user, where the user can make a reservation, view a menu and/or view current seating wait times. In still another example, a night club may use such a RFID reader to provide taxi service information, such as taxi service contact information, or even to initiate a taxi request. Such a RFID reader can be attached or embedded into the night club door frame, tables, or a dedicated taxi station or kiosk located therein. Information such as one or more taxi service contact numbers of the best or closest taxi service can then be sent to the user. In still another example, a remote processor is further programmed to send information including user billing (*e.g.*, credit card) information to a particular merchant offering the RFID reader, such as for paying for a taxi ordered in connection with the previous example.

In another implementation, the merchant-media provider has instructions posted near an RFID reader telling a user with an RFID tag what action will occur, if a RFID tag is presented to the RFID reader. For instance, using the restaurant example above, a menu may have an RFID reader node indicating to the user, "Place your travel card (*i.e.*, RFID tag) here to have our web site address sent with SMS to your mobile phone." The RFID reader node is correspondingly adapted to send an interrogation signal and read the RFID tag information, and to send the information including the user ID from the RFID tag to a remote processor, which uses the user ID to determine where to send content (in this example, an SMS message including the web site address). Another RFID reader node may be used for receiving the user ID for requesting reservation availability information. For instance, a user can place his or her RFID tag near an RFID reader node to receive and email indicating available reservation times, to which the user can respond for making a reservation.

As can be seen from the foregoing examples, such physical tag (RFID tag) association with merchant-media can be implemented with a variety of types of advertising approaches. By utilizing physical tags in this manner, users can access information directly from a merchant-media source (*e.g.*, a billboard or menu). For example, because essentially all restaurants have menus and possible seating wait times, it is foreseeable that a person will want to know that information while physically near the restaurant. Rather than requiring a passer-by to search for information, the information can simply be provided to the user, either at the RFID reader site (*e.g.*, through a wireless device) or using other means, such as email or paper mail that the user obtains at a later time.

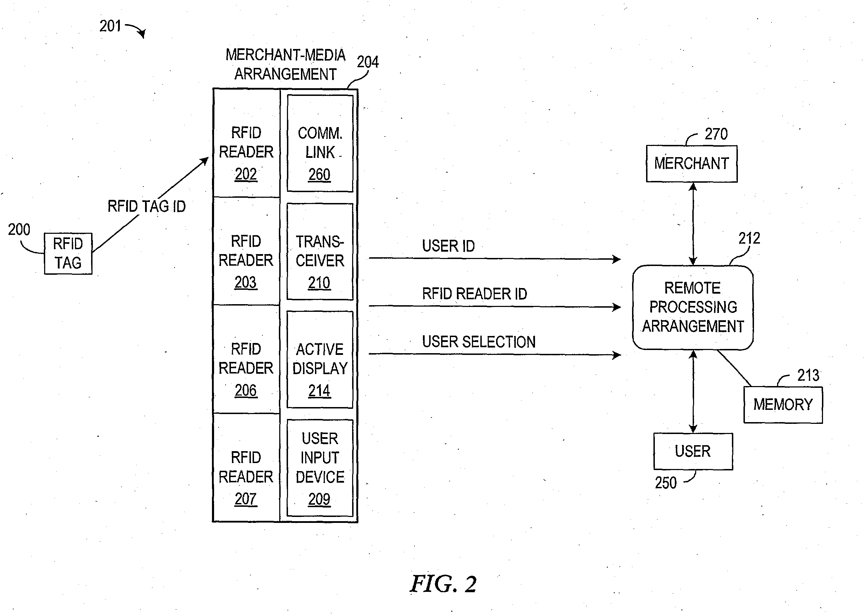

FIG. 2 is a system 201 for conveying merchant-media content from a merchant 270 to a user address location 250 using an RFID tag 200, according to another example embodiment of the present invention. User information *(i.e.,* a user ID) at the RFID tag 200 is associated with the user address location 250 and is communicated through a merchant-media arrangement 204, which processes data received from the RFID tag 200 for communicating a merchant-information request. The data is processed, for example, using a microprocessor located in the merchant-media arrangement 204. The system 201 is adapted for initiating a number of representative service types using the RFID tag 200 and one or more RFID readers including RFID readers 202, 203, 206 and 207. When RFID tag 200 is brought within a transmission range of the RFID reader 202, the user ID data is transmitted from the RFID tag 200 to the RFID reader 202. Each of the RFID readers is spaced sufficiently apart such that an RFID tag can be positioned to communicate exclusively with one of the RFID readers.

After the RFID tag information is processed at the merchant-media arrangement 204, a transceiver 210 (*e.g.*, a wired and/or wireless modem or mobile telephony appliance) sends the merchant-information request to a remote processing arrangement 212 using wireless or wireline connection. According to various embodiments of the present invention, the merchant-information request may be transferred using for example SMS, MMS, voice call, email, TCP/IP or even physical mail. The merchant-information request is representative of the user ID received from the RFID tag 200 and of a particular type of information content request associated with the merchant-media arrangement 204. For example, using a unique merchant-media ID stored at the merchant-media arrangement, the type of content displayed at the merchant-media arrangement can be identified.

In one particular implementation, the transceiver 210 is a mobile telephone transceiver adapted to send the merchant-information request via a mobile telephone network. The remote processing arrangement 212 receives the merchant-information request and, in response, processes the request by associating RFID tag information with a set of user address locations and sends content information such as, for example an image, a ringtone, a URL, a video clip , a V-Card, a calendar entry, terminal configuration settings, a picture message, an operator logo, a receipt, loyalty bonus points, a customer service call, a ticket, a discount voucher or an advertising brochure) to a specific user address location 250 by way of a communications link 251. The user address location 250 may be defined with the received RFID reader ID or it can be a default address, if no specific address is identified. The communications link (*e.g.*, wired and/or wireless links, the Internet and conventional mail) is selected based upon a communications media type selected by the user. According to various non-limiting embodiments of the present invention, the user address may be a mobile- or fixed-line phone number, an IP or email address, or even a postal address.

The remote processing arrangement 212 includes a microcontroller programmed for conveying the content information to the proper user address location 250 using one or more of a variety of approaches. In one implementation, a merchant processing arrangement 270 communicates with the remote processing arrangement 212 for storing the content information in a memory 213 at the remote processing arrangement. In another implementation, the remote processing arrangement 212 is adapted for informing the merchant processing arrangement 270 of the merchant-information request, the user address location 250 and the particular communications medium. The merchant processing arrangement then uses this information to send content information directly to the user address location 250. In still another implementation, the remote processing arrangement 212 accesses information stored at the merchant processing arrangement 270 and conveys content information including the information stored at the merchant processing arrangement to the user address location 250.

In another implementation, a user sends user preference information to the remote processing arrangement 212 (*e.g.*, using a registration approach) including one or more of preferred communications medium, address and/or other information. The user registration may involve the user signing up, for example, at the merchant-media arrangement 204, when purchasing an RFID tag device, using SMS (*e.g.*, to a mobile phone) or at a recharge point (*e.g.*, a kiosk for recharging a RFID tag device). When registering at the merchant-media arrangement, one or more of types of user interfaces, such as a keypad, touch screen or other type of interface is used for inputting data for the registration. In some implementations, user registration is free, such that host providers can charge merchants for access to the user's registration information and/or for sending information to the user. In other implementations, user registration is fee-based, where users pay to have their information stored and to receive information upon request (*e.g.*, in response to placing his or her RFID tag in proximity of an advertisement).

According to various other implementations of the present invention, the registration process for subscribing to services may be performed by linking user ID with existing customer database. The database could be implemented, for example, as a database provided by a loyalty program or any other trusted entity. The registration may also be performed at the merchant-media arrangement site, for example, wherein the user could send an SMS message including some available service identification to a certain number that is identified by the merchant-media arrangement. The remote processing unit may then respond by sending back e.g. an SMS message or a voice call informing the user to put his/her RFID tag to the RFID reader field in order to register to the service. According to other implementations, the registration may be done, *e.g.*, over the Internet by the user.

The merchant-information request is associated with one or more of the merchant-media arrangement 204, the particular RFID reader 202 or a switch arrangement 209 at the merchant-media arrangement 204. The remote processing arrangement 212 includes stored information including address and communications medium preferences associated with the particular user ID, as well as content information (*e.g.*, product data, advertisement, electronic ticket or discount coupon or even a voucher) associated with the merchant-media arrangement 204. The remote processing arrangement 212 sends the content information to a particular user address location 250 based on one or more of: information stored at the remote processing arrangement and information stored at the merchant-media arrangement 204. In one instance, the merchant-media arrangement 204 sends content identification data, such as a RFID reader ID or a merchant ID stored at the merchant-media arrangement 204, to the remote processing arrangement 212. In response, the remote processing arrangement 212 matches the content-identification data with content information stored at the remote processing arrangement 212 and sends the stored content information to the user address location 250.

In another instance, the merchant-media arrangement 204 sends content information to the remote processing arrangement 212, which in turn sends the received content information to the user address location 250 using the user ID. With this approach, a merchant advertising with the merchant-media arrangement 204 has the option of storing product information at a merchant-media arrangement 204 and/or at the remote processing arrangement 212.

In another implementation, the merchant-media arrangement 204 includes all of the RFID readers 202, 203, 206 and 207, with each reader being associated with a particular type of merchant-information request. Users at the merchant-media arrangement position an RFID tag 200 within range of one of the plurality of RFID readers to request different types of communications. For instance, when the merchant-media arrangement is advertising a product (*e.g.*, an automobile type) having different options (*e.g.*, different automobile models), a local user places his or her RFID tag near an RFID reader corresponding to the particular option (*e.g.*, model) for which he or she is requesting information.

The user input device 209 is adapted for selecting a particular type of merchant-information request, in connection with another example embodiment. For instance, when the merchant-media arrangement 204 is advertising different types of products, the user input device 209 is used for requesting information for the particular type of product. A user brings his or her RFID tag 200 within range of one or more of the RFID readers 202, 203, 206 and 207 and makes a selection using the user input device 209. The transceiver 210 then sends a communication to the remote processing arrangement 212 including a user ID from the RFID tag and information regarding the particular type of information requested using the user input device 209. For this embodiment, FIG. 2 illustrates the merchant-information request (from the merchant media arrangement 204 to the remote processing arrangement 212) as including, in addition to the "USER ID" and the "RF READER ID," data representing "USER SELECTION."

In another example embodiment, the merchant-media arrangement 204 is adapted for offering selections to a local user bearing the RFID tag 200 including a type of communications medium through which the local user wishes to receive merchant information. In one implementation, the RFID readers 202, 203, 206 and 207 are each associated with a particular type of communications medium through which merchant-media content is to be sent to a user. In another implementation, the user input device 209 is used for selecting a particular type of communications medium. In response to either a particular RFID reader receiving communications from an RFID tag and/or the user input device 209, the transceiver 210 sends merchant-information request data to the remote processing arrangement 212. The merchant-information request data includes a request for the particular type of communications media through which the merchant-media content is to be delivered, which may, for example, include instructions for using a particular type of communications medium. Alternatively, or in addition, the merchant-information request data includes a code *(i.e.,* an RFID code), and the remote processing arrangement 212 has stored information including the particular type of communications medium that is associated with the code.

As discussed above, various types of communication medium requests can be initiated at the merchant-media arrangement 204. The example communication medium requests are respectively directed to requests including, but not necessarily limited to: a short-messaging-service (SMS) request, an MMS request, a URL request, a wireless download request, an email request, a telephone call request, a mobile gambling request and a physical mail *(i.e.,* paper) request. Using at least one RFID tag 200, the RFID readers 202, 203, 206 and 207 and the user input device 209, one or more such communications medium requests are selected.

Referring again to FIG. 2, in another example embodiment of the present invention, the merchant-media arrangement 204 further includes a communications link 260 for communicating with a user device. For instance, a communications link adapted for using Bluetooth-type communications approaches may be used. The user device may, for example, also include the user address location 250 and/or the RFID tag 200. For instance, when a user in possession of the RFID tag 200 also includes a wireless communications device, such as a mobile phone, he or she can communicate with the merchant-media arrangement directly through the communications link 260. Information such as merchant-information request data and communications medium request data is communicated from a user to the merchant-media arrangement 204 through the communications link 260. In one particular implementation, the remote processing arrangement 212 sends content information to the user address location 250 back through the merchant-media arrangement 204 *(i.e.,* wherein the communications link 251 includes the merchant-media arrangement and the communications link 260).

In another implementation, the communications link 260 is adapted for providing Wireless Application Protocol (WAP) browsing, or an analogous protocol facilitating mobile browsing, to a user having the RFID tag 200 at the merchant-media arrangement 204. WAP is a set of protocols that accounts for characteristics and functionality of both Internet standards and standards for wireless services, and integrates the Internet and other networks with wireless network platforms. WAP thus bridges the gap between the wired Internet paradigm and the wireless domain, to allow wireless device users to enjoy the benefits of the Internet across both platforms. In one implementation, the RFID tag 200 is used to enable a wireless connection between a user at the merchant-media arrangement 204 and the communications link 260. For instance, a mobile phone, PDA or laptop computer may include the RFID tag 200 and further include a user ID that can be wirelessly transmitted to the merchant-media arrangement 204 through the communications link 260 *(i.e.,* for verifying the user is enabled for using the wireless link).

An active display 214, such as a video display and/or a moving physical display (*e.g.*, a scrolling banner or rotating panel display), is included at the merchant-media arrangement 204 in connection with another example embodiment. The active display 214 is adapted to display media to a local user bearing the RFID tag 200. The displayed media is optionally changed, such as for displaying different products from the same or different merchants at different time intervals. In such an instance, the merchant-media arrangement 204 is adapted for sending data to the remote processing arrangement 212 that corresponds to a particular type of media being displayed when a signal from the RFID tag 200 is received. For instance, by storing merchant content information related to the particular type of products being displayed at the merchant-media arrangement, data identifying the type of product being displayed is accessed and sent to the remote processing arrangement 212 when the RFID tag 200 is read.

In another example embodiment, merchants using the remote processing arrangement 212 for conveying advertising information register to a service provided by a host of the remote processing arrangement. The registration is a paid subscription provided by the host for advertising purposes, with the remote processing arrangement 212 storing a merchant registration status. Merchants having paid for their subscription are currently registered, and those failing in payment are non-currently registered. In this implementation, when a request is received for information from a particular merchant-media arrangement, the remote processing arrangement 212 verifies that the particular merchant for whom the merchant-media arrangement conveys information has a current registration. If the registration is not current, information is not sent to the user address location 250. In the instance where the merchant-media arrangement 204 includes the active display 214, the remote processing arrangement 212 is adapted for controlling the display in response to the subscription status of a merchant. For example, if a merchant registration lapses, the remote processing arrangement 212 communicates with the merchant-media arrangement for disabling the content for the particular merchant.

In another example embodiment of the present invention, feedback to a user at the merchant-media arrangement is provided to indicate that the user's user ID has been read. For instance, referring again to FIG. 2, the merchant-media arrangement 204 includes a feedback device, such as an LED (light-emitting diode) or a speaker emitting an audio signal, that alerts a user when his or her RFID tag has been read. In one implementation, the communications link 260 includes the feedback device. With this approach, a user receives confirmation that his or her ID has been read.

In another example embodiment of the present invention, the merchant-media arrangement 204 of FIG. 2 is further adapted for limiting the number of repetitive communications from a particular user-communications device. For instance, when a user presents his or her RFID tag to an RFID reader, it is typically desirable that only one request for information be made, such that a user does not inadvertently or intentionally request information more than once. In one implementation, the merchant-media arrangement 204 includes pre-set timer, and the pre-set time sets a time period during which communications from a particular RFID tag can not be processed. By starting the timer when RFID tag information is read from a certain RFID reader, the subsequent receipt of duplicate RFID tag information received through the same RFID reader can be ignored for a pre-set amount of time.

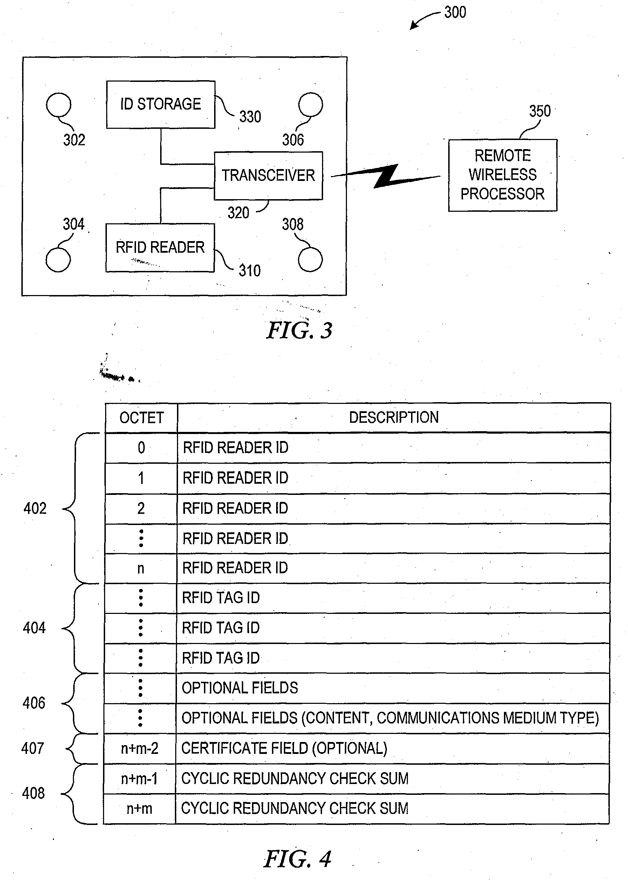

FIG. 3 shows a portable add-on media communications arrangement 300 adapted for implementation with fixed and mobile conventional advertising arrangements, such as a billboard or other advertisement arrangement on stationary display or in public transportation vehicles (*e.g.*, busses, subways and trains). The media communications arrangement 300 is adapted for coupling with one or more of a plurality of types of media, such as advertising billboards, display screens, vending machines, advertising kiosks, ticketing machines, point-of-sale terminals and others. Optionally, fasteners 302, 304, 306 and 308 (*e.g.*, screws and/or adhesive) are used to fasten the media communications arrangement 300 to advertising media. The media communications arrangement 300 includes an RFID reader 310 and an identification (ID) storage device 330 that are coupled to a transceiver 320. The RFID reader 310 is adapted to send activation signals for activating RFID tags brought within a particular range of the RFID reader arrangement 300 (*e.g.*, as discussed above in connection with FIG. 1). The ID storage device 330 stores a unique ID for the RFID reader arrangement 300.

In response to the RFID reader 310 receiving RFID tag information, the transceiver 320 sends a wireless signal to a remote wireless processor arrangement 350, the wireless signal including the unique ID for the media communications arrangement 300 and the RFID tag information. The remote wireless processor arrangement 350 is pre-programmed with media content information assigned to the unique ID for the media communications arrangement and with user preferences including user address information and one or more preferred types of communications associated with the RFID tag. In response to receiving the wireless signal from the transceiver 320, the remote wireless processor arrangement 350 uses the unique ID to retrieve media content information associated therewith and uses the RFID tag information to send the media content information to the user address using the preferred type of communications.

The media communications arrangement 300 is adaptable for use with existing advertising media and also can be moved or implemented with updated advertising media. For instance, when the media communications arrangement 300 is moved to a different type of advertising media, the remote wireless processor 350 is programmed to assign the unique ID to a new type of media content associated with the different advertising media.

Similarly, when the advertising media to which the media communications arrangement 300 is attached is changed, the remote wireless processor 350 is correspondingly reprogrammed to assign the unique ID to a new type of media content, consistent with the changed advertising media. For instance, when the content of a billboard is changed, the unique ID is assigned to the changed content. The content may also be audio information delivered through loudspeakers installed at the merchant media arrangement.

FIG. 4 shows an information block 400 used in the transmission of data in connection with a merchant-media arrangement, according to another example embodiment of the present invention. The information block 400 may be implemented, for instance, in connection with the example embodiments described herein, such as those discussed in connection with the figures. The information block 400 includes a RFID reader identifier field 402 used to identify a particular RFID reader from which the information block is communicated. RFID tag information identifier field 404 is used to identify a tag read by the particular RFID reader. Field 406 is optional and may include a variety of other information, such as user-selected media content or communications medium type. Each of the fields shown in information block 400 are varied in length, depending upon the implementation; for instance, field 406 is eliminated or expanded depending upon the need for optional communications.

In one implementation, field 406 includes content type information for use in communicating information in addition to RFID tag and RFID reader information, such as information regarding user selections and other data. For instance, when implemented in connection with the communications link 260 and/or user input device 209 of FIG. 2, the optional field 406 is implemented for communicating data received from a local user to the remote processing arrangement 212. The content type of such data may include SMS, MMS, URL for use with WAP browsing, Java program download requests and/or Java programs (*e.g.*, MIDlets), UPC/EPC, smart message, and the like. Each of these and other content types can be identified using the optional field 406.

The information block 400 optionally includes a certificate field 407, shown as one octet but of any desired length. This field 407 may be used, for example, to provide an electronic signature to guarantee authenticity of the communications. A check sum field, such as Cyclic Redundancy Check (CRC) field 408, may also be provided with the information block 400. The CRC information may be used to determine whether errors occurred in connection with the reading of the tag information 400. Other and/or different information may also be provided, as the present invention contemplates any number of different tag content types, formats, fields, *etc.*

Using the description provided herein, the invention may be implemented as a machine, process, or article of manufacture by using standard programming and/or engineering techniques to produce programming software, firmware, hardware or any combination thereof.

Any resulting program(s), having computer-readable program code, may be embodied on one or more computer-usable media such as resident memory devices, smart cards or other removable memory devices, or transmitting devices, thereby making a computer program product or article of manufacture according to the invention. As such, the terms "article of manufacture" and "computer program product" as used herein are intended to encompass a computer program that exists permanently or temporarily on any computer-usable medium or in any transmitting medium which transmits such a program.

As indicated above, memory/storage devices include, but are not limited to, disks, optical disks, removable memory devices such as smart cards, SIMs, WIMs, semiconductor memories such as RAM, ROM, PROMS, *etc.* Transmitting mediums include, but are not limited to, transmissions using wireless/radio wave communication networks, the Internet, intranets, telephone/modem-based network communication, hard-wired/cabled communication network, satellite communication, and other stationary or mobile network systems/communication links.

From the description provided herein, those skilled in the art are readily able to combine software created as described with appropriate general purpose or special purpose computer hardware to create a mobile computer system and/or computer subcomponents embodying the invention, and to create a mobile computer system and/or computer subcomponents for carrying out the method of the invention.

The foregoing description of the exemplary embodiments of the invention has been presented for the purposes of illustration and description. It is not intended to be exhaustive or to limit the invention to the precise form disclosed. Many modifications and variations are possible in light of the above teaching. For example, it will be apparent to those skilled in the art from the foregoing description that the invention is equally applicable to other current or future radio frequency identification technologies using, for example, electromagnetic/electrostatic coupling, and thus the present invention is not limited to "RFID" technology as this term is currently used. It is intended that the scope of the invention be limited not with this detailed description, but rather defined by the claims appended hereto.

## Claims

1. An interactive communications system for use in conveying information to a selected user having a communications-user-receipt address stored with respective other communications-user-receipt addresses for other users, the interactive communications system comprising:
a user-communications device including user identification (ID) data stored therein and being adapted to communicate the user ID data for the selected user;
a merchant-media arrangement having at least one merchant-media ID code and being adapted to receive and process the user ID data by sending a merchant-information-request signal that includes data representative of the merchant-media ID code and the user ID data; and
a data processing arrangement adapted to access, in response to receiving the merchant-information-request signal, stored merchant information corresponding to the merchant-media ID code and a stored communications-user-receipt address corresponding to the user ID data, and to send the accessed merchant information to the accessed communications-user-receipt address of the selected user.

2. The interactive communications system of claim 1, wherein the user-communications device includes a radio frequency identification (RFID) tag including the user ID and adapted for transmitting the user ID via an RF signal and wherein the merchant-media arrangement includes an RFID reader adapted to read the RF signal.

3. The interactive communications system of claim 2, wherein the RFID tag is adapted for transmitting the user ID via the RF signal in response to an activation signal.

4. The interactive communications system of claim 3, wherein the merchant-media arrangement is adapted for transmitting the activation signal.

5. The interactive communications system of claim 1, wherein the user-communications device is a wireless-communications device and includes a transponder adapted to transmit the user ID data in response to a signal received thereby.

6. The interactive communications system of claim 5, wherein the wireless communications device includes a device selected from the group of: an identification card, travel card, payment card, loyalty card, an access key, a wireless telephone, a computer and a PDA.

7. The interactive communications system of claim 1, wherein the user-communications device is a passive wireless-communications device adapted to transmit the user ID data in response to an activation signal from the merchant-media arrangement while using the activation signal to power the transmission of the user ID data.

8. The interactive communications system of claim 1, wherein the user-communications device includes a power source used for communicating the user ID data.

9. The interactive communications system of claim 1, wherein the user-communications device is adapted to physically interface with the merchant-media arrangement and to communicate the user ID data to the merchant-media arrangement via the physical interface.

10. The interactive communications system of claim 1, wherein the merchant-media arrangement is adapted to convey media information to a user in possession of the user-communications device.

11. The interactive communications system of claim 1, wherein:
the user-communications device is a wireless-communications device;
the merchant-media arrangement includes at least two receivers spaced apart at a selected distance and adapted to receive user ID data from the wireless communications device; and
the wireless-communications device is adapted to transmit the user ID data for a selected range, the selected distance at which the at least two receivers are spaced being sufficient such that the wireless-communications device cannot simultaneously transmit the user ID data to both receivers.

12. The interactive communications system of claim 11, wherein:
each receiver has a unique merchant-media ID code;
the merchant-media arrangement is adapted to send a merchant-information-request signal that includes data representative of the at least one merchant-media ID code from one of the at least two receivers that receives user ID data;
the selected user has at least two types of stored communications-user-receipt addresses; and
the data-processing arrangement is adapted to access a first one of the two types of stored communications-user-receipt addresses in response to receiving a merchant-information-request signal including data representative of a first one of the merchant-media ID codes, and to access a second one of the two types of stored communications-user-receipt addresses in response to receiving a merchant-information-request signal including data representative of a second one of the merchant-media ID codes.

13. The interactive communications system of claim 1, wherein the merchant-media arrangement further includes a user interface adapted to receive user inputs including merchant-information-type request input data, the merchant-media arrangement being adapted to receive and process the user ID data and the user inputs by sending a merchant-information-request signal that includes data representative of the merchant-media ID code, the user ID data and the merchant-information-type request input data.

14. The interactive communications system of claim 13, wherein the merchant-media arrangement is adapted to send merchant-information-type request input data that includes a communications medium type selection for selecting the a communications medium via which the stored merchant information is sent.

15. The interactive communications system of claim 13, wherein the merchant-information-type request input data includes a communications medium type selection for sending the stored merchant information.

16. The interactive communications system of claim 13, wherein the merchant-media arrangement includes a user interface adapted for receiving information from the data processing arrangement and for communicating the received information to a user at the merchant-media arrangement in response to the user-communications device communicating the user ID data.

17. The interactive communications system of claim 16, wherein the user interface is adapted for communicating at least two different types of advertising media to the user at exclusive time periods, wherein the merchant-media arrangement includes a unique merchant-media ID code for each of the at least two different types of advertising media and is adapted for sending a merchant-information-request signal including one of the unique merchant-media ID codes corresponding to the one of the at least two different types of advertising media being displayed when the user ID data is transmitted.

18. The interactive communications system of claim 1, wherein the merchant-media arrangement includes the data processing arrangement.

19. The interactive communications system of claim 1, further comprising a feedback device adapted to communicate a signal to a user at the merchant-media arrangement when the merchant-media arrangement receives the user ID data.

20. The interactive communications system of claim 1, wherein the merchant-media arrangement is further adapted to mitigate repetitive sending of a merchant-information-request signal in response to a user-communications device consecutively communicating the user ID data for the selected user.

21. An interactive communications system for use in conveying information to a selected user, the interactive communications system comprising:
a wireless-communications device including user identification (ID) data stored therein and being adapted to transmit the user identification (ID) data;
a merchant-media arrangement having at least one merchant-media ID code and being adapted to receive and process the user ID data by sending a merchant-information-request signal that includes data representative of the merchant-media ID code and the user ID data;
a first memory storing respective predetermined communications-user-receipt addresses for selected users;
a second memory storing merchant information for the merchant-media ID code; and
a data processing arrangement adapted to receive the merchant-information-request signal and to access the first and second memories, and in response to the merchant-information request signal including data representative of user ID data that corresponds to one of the selected users, adapted to send the stored merchant information to the predetermined communications-user-receipt address of the one of the selected users.

22. The interactive communications system of claim 21, wherein the second memory is located at a remote merchant processing arrangement that is remote from the data processing arrangement and corresponds to the merchant-media ID code and wherein the data processing arrangement is adapted to send the stored merchant information to the predetermined communications-user-receipt address by sending the predetermined communications-user-receipt address to the remote merchant processing arrangement, which responds by sending the stored merchant information to the communications-user-receipt address of the selected user.

23. The interactive communications system of claim 21, wherein the remote processing arrangement is adapted to send the stored merchant information directly to the wireless communications device via a wireless communications link.

24. For use with an interactive communications system having a data processing arrangement that stores respective communications-user-receipt addresses for selected user IDs and sends selectable merchant information to selectable communications-user-receipt addresses, a merchant-media arrangement comprising:
a display media for displaying information available from a merchant;
a receiver adapted to wirelessly receive user identification (ID) data from a user communications device;
a memory adapted to store at least one merchant-media ID code that identifies media displayed at the merchant-media arrangement; and
a wireless transmitter adapted to wirelessly send a merchant-information-request signal that includes data representative of the merchant-media ID code and user ID data received by the receiver, the merchant-information-request signal indicating to the interactive communications system a selected communications-user-receipt address as a function of the user ID data and indicating selected merchant information for sending to the selected communications-user-receipt address as a function of the stored merchant-media ID code.

25. The merchant-media arrangement of claim 24, further including a plurality of RFID readers, each RFID reader having a unique ID that identifies the merchant media arrangement.

26. The merchant-media arrangement of claim 24, wherein the receiver, the memory and the wireless transmitter are included in a portable add-on arrangement adapted for coupling to existing display media.

27. The merchant-media arrangement of claim 26, wherein the portable add-on arrangement has a re-programmable merchant-media ID code programmed to correspond to a merchant offering the display media to which the portable add-on arrangement is coupled.

28. The merchant-media arrangement of claim 24, wherein the display media, receiver, memory and wireless transmitter are included in a mobile arrangement adapted for coupling to a moving display location.

29. For use with an interactive communications system that stores respective communications-user-receipt addresses for selected users, a method of conveying information to one of the selected users, the method comprising:
wirelessly communicating user identification (ID) data for the one selected user to a merchant-media arrangement having at least one merchant-media ID code;
sending a merchant-information-request signal that includes data representative of the merchant-media ID code and the user ID data from the merchant media arrangement; and
at a data processing arrangement, receiving the merchant-information-request signal and, in response thereto, accessing stored merchant information that corresponds to the merchant-media ID code and sending the stored merchant information to a communications-user-receipt address that corresponds to the user ID data.

30. The method of claim 29, wherein wirelessly communicating user ID data includes wirelessly activating a transponder and, in response thereto, wirelessly communicating the user ID data to the merchant-media arrangement.

31. The method of claim 29, further comprising registering a communications-user-receipt address that corresponds to the user ID data with the data processing arrangement and wherein sending the stored merchant information includes sending the stored merchant information to the registered communications-user-receipt address.

32. The method of claim 29, further comprising registering with the data processing arrangement a merchant registration status that corresponds to the merchant-media ID code, the merchant registration status being indicative of the currency of a particular merchant's registration, wherein accessing stored merchant information includes determining that the merchant-media ID code corresponds to a current merchant registration status and wherein sending the stored merchant information includes sending the stored merchant information in response to the merchant registration status being current.

33. The method of claim 29, further comprising communicating user-input data via a user interface at the merchant-media arrangement, wherein sending the merchant-information request signal includes sending data representative of the user-input data and wherein accessing stored merchant information and sending the stored merchant information includes accessing and sending the stored merchant information in response to the data representative of the user-input data.

34. The method of claim 29, further comprising communicating merchant-media data to the one selected user via the merchant-media arrangement.

35. The method of claim 34, wherein communicating merchant-media data to the one selected user includes communicating the accessed stored merchant information to the one selected user via the merchant-media arrangement.

36. An interactive communications system for communicating information to a selected user, the system comprising:
a user device (102);
transceiver means (112); and
data processing means (140); wherein
the user device (102) is arranged to communicate user identification data for the selected user to the transceiver means,
the transceiver means (112) is arranged to receive the user identification data and to send data identifying the user and data identifying the transceiver means to the data processing means, and
the data processing means (140) is arranged to retrieve a user address based on the received user identity data, to retrieve information associated with the received transceiver identity data and to send the retrieved information to the user address.
